(19)

**Europäisches Patentamt**
**European Patent Office**
**Office européen des brevets**

(11) **EP 4 399 706 B1**

(12) **EUROPEAN PATENT SPECIFICATION**

(45) Date of publication and mention
of the grant of the patent:
**21.05.2025 Bulletin 2025/21**

(21) Application number: **21814740.3**

(22) Date of filing: **15.11.2021**

(51) International Patent Classification (IPC):
**G10L 17/20** (2013.01)      **G06F 21/32** (2013.01)

(52) Cooperative Patent Classification (CPC):
**G10L 17/20; G06F 21/32**

(86) International application number:
**PCT/EP2021/081627**

(87) International publication number:
**WO 2023/083471 (19.05.2023 Gazette 2023/20)**

(54) **METHOD AND APPARATUS FOR VOICE SPOOFING DETECTION IN NOISY ENVIRONMENT**

VERFAHREN UND VORRICHTUNG ZUR ERKENNUNG VON SPOOFING IN LAUTER UMGEBUNG

PROCÉDÉ ET APPAREIL DE DÉTECTION DE MYSTIFICATION VOCALE DANS UN
ENVIRONNEMENT BRUYANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.07.2024 Bulletin 2024/29**

(73) Proprietor: **Huawei Technologies Co., Ltd.
Shenzhen, Guangdong 518129 (CN)**

(72) Inventor: **POGORELIK, Oleg
80992 Munich (DE)**

(74) Representative: **Körber, Martin Hans
Mitscherlich PartmbB
Patent- und Rechtsanwälte
Karlstraße 7
80333 München (DE)**

(56) References cited:
**US-A1- 2018 232 511**

- **GÓMEZ ALANÍS ALEJANDRO ET AL: "A Deep
Identity Representation for Noise Robust
Spoofing Detection", INTERSPEECH 2018, 2
September 2018 (2018-09-02) - 6 September 2018
(2018-09-06), ISCA, pages 676 - 680,
XP055937047, DOI: 10.21437/
Interspeech.2018-1909**
- **CEMAL HANILCI ET AL: "Spoofing detection
goes noisy: An analysis of synthetic speech
detection in the presence of additive noise",
SPEECH COMMUNICATION, vol. 85, 10 October
2016 (2016-10-10), NL, pages 83 - 97,
XP055744027, ISSN: 0167-6393, DOI: 10.1016/
j.specom.2016.10.002**
- **HANSEN J ET AL: "Analysis and Compensation
of Lombard Speech Across Noise Type and
Levels With Application to In-Set/Out-of-Set
Speaker Recognition", IEEE TRANSACTIONS ON
AUDIO, SPEECH AND LANGUAGE
PROCESSING, IEEE, US, vol. 17, no. 2, 11
February 2009 (2009-02-11), pages 366 - 378,
XP011249968, ISSN: 1558-7916, DOI: 10.1109/
TASL.2008.2009019**

**Description**

## TECHNICAL FIELD

The disclosure relates to voice spoofing detection, more particularly, the disclosure relates to a method for voice spoofing detection in noisy environment with improved protection and accuracy. The disclosure also relates to an apparatus for voice spoofing detection in the noisy environment with improved protection and accuracy.

## BACKGROUND

Most of the electronic devices use biometric security measures i.e. biometric authentication, that grant access to any of using or performing any operations in the electronic devices. One of the biometric authentications is voice authentication that is widely applied in modern voice assistants, speech-controlled systems, and the like. The voice authentication is configured to match vocal utterances with a biometric profile to grant access. Many voice authentication systems accessing services may be limited per person as those voice authentication systems equip a voice authentication/verification subsystem, AVS. Typical voice verification system couples with an activation phrase detector and uses wake-up phrase to authenticate the user as known in Alexa. For example, the wake-up phrase is a matching voice pattern with pre-recorded template. These types of voice authentication systems may prone to spoofing attacks, such as voice replay, and voice synthesis.

Currently, there are several known voice anti-spoofing techniques are available, including detection of record/replay audio artifacts, and detection of a voice background continuity fracture. Existing voice anti-spoofing techniques in the voice authentication system are highly depending on environmental parameters where noise is a dominating one. High noise levels for automotive, industrial and open space applications provide anti-spoofing engines to edge and attackers may utilize noise injection for constructing successive attacks on the voice authentication systems. Further, those voice authentication systems include several complementary techniques to establish a feasible protection level. Low resilience to the noise is one of the key issues in the existing voice anti-spoofing systems. Spoof detection errors may grow with high noise levels, that the voice authentication system security and user experience may become unacceptable.

Therefore, the present invention aims to improve the performance of existing systems or technologies in voice spoofing detection.

GOMEZ ALANIS ALEJANDRO ET AL: "A Deep Identity Representation for Noise Robust Spoofing Detection", INTERSPEECH 2018, 2-6 September 2018, Hyderabad, India discloses the extraction of spoofing identity vectors, as well as the use of soft missing-data masks to counter spoofing attacks. The proposed feature extraction employs a convolutional neural network (CNN) plus a recurrent neural network (RNN) in order to provide a single deep feature representing a spoofing identity per utterance.

## SUMMARY

It is an object of the disclosure to provide a method, and an apparatus for voice spoofing detection in noisy environment with improved protection and accuracy while avoiding one or more disadvantages of prior art approaches.

This object is achieved by the features of the independent claims. Further implementations are apparent from the dependent claims, the description, and the figures. The disclosure provides a method of voice spoofing detection in noisy environment. The disclosure also provides an apparatus for voice spoofing detection in the noisy environment.

According to a first aspect, there is provided a method of voice spoofing detection in noisy environment. The method includes receiving a voice input of a user. The method includes receiving an environmental noise measure corresponding to the voice input of the user. The method includes authenticating the user based on the voice input. The method includes determining noise parameters based on the environmental noise measure. The method includes determining actual values of Lombard effect related features of the user voice based on the voice input of the user. The method includes determining a voice spoofing probability by comparing the actual values of the Lombard effect related features with a Lombard effect related feature template of the authenticated user corresponding to the determined noise parameters.

This method provides improved protection against voice spoofing attacks in noisy environments. The method protects against replay, mimicking, and voice synthesis attacks. The method may include additional independent authentication factors to authenticate the user thereby securing systems. The method is relatively lightweight. The method provides improved accuracy in the voice input of the user with the voice spoofing probability even in the very noisy environments. The method introduces a complementary technique of speech spoofing detection utilizing noise for good, which brings significant improvement of the voice anti-spoofing in the noisy environments.

Optionally, the Lombard effect related features include changes between characteristics of the user voice in time, spectrum and power-spectrum domains under normal conditions and in the noisy environment, including changes in:

phonetic fundamental frequencies, an energy distribution among low, middle and high frequency bands, a sound intensity, a vowel duration, spectral tilting, formal center frequencies, a key words duration and a lung volume.

Optionally, the noise parameters include a noise type and a noise level.

Optionally, the Lombard effect related feature template includes pre-determined values of the Lombard effect related features of the user voice under different noise parameters.

Optionally, the pre-determined values of the Lombard effect related features include averaged values of the Lombard effect related features collected for the user voice under different noise parameters during a training period.

Optionally, the voice spoofing probability is determined as a function of a different between the actual values of the Lombard effect related features and the pre-determined values of the Lombard effect related features from the Lombard effect related feature template of the authenticated user corresponding to the determined noise parameters.

Optionally, the Lombard effect related feature template further includes weights of the Lombard effect related features and the voice spoofing probability is determined as a function of the weighted difference between the actual values of the Lombard effect related features and the pre-determined values of the Lombard effect related features, the weighted different being obtained with the weights.

Optionally, the method further includes validating the authentication of the user based on the voice spoofing probability.

Optionally, the method further includes updating the Lombard effect related feature template of the user with the actual values of the Lombard effect related features in reply to the validation of the authentication of the user.

According to a second aspect, there is provided an apparatus for voice spoofing detection in noisy environment. The apparatus includes an input module configured for receiving a voice input of a user and an environmental noise measure corresponding to the voice input of the user, a speech verification module configured for authenticating the user based on the voice input, a noise retriever configured for determining noise parameters based on the environmental noise measure, a Lombard feature retriever configured for determining actual values of Lombard effect related features based on the voice input of the user, and a spoofing detector configured for determining a voice spoofing probability by comparing the actual values of the Lombard effect related features with a Lombard effect related feature template of the authenticated used corresponding to the determined noise parameters.

The apparatus provides improved protection against voice spoofing attacks in noisy environments. The apparatus protects against replay, mimicking and voice synthesis attacks. The apparatus may include additional independent authentication factors to authenticate the user thereby securing systems. The apparatus is relatively lightweight. The apparatus provides improved accuracy in the voice input of the user with the voice spoofing probability even in the very noisy environments. The apparatus introduces complementary technique of speech spoofing detection utilizing noise for good, which brings significant improvement of the voice anti-spoofing in the noisy environments.

Optionally, the Lombard feature retriever is configured for determining actual values of the Lombard effect related features by estimating changes between characteristics of the user voice in time, spectrum and power-spectrum domains under normal conditions and in a noisy environment, including changes in: phonetic fundamental frequencies, an energy distribution among low, middle and high frequency bands, a sound intensity, a vowel duration, spectral tilting, format center frequencies, a key words duration and a lung volume.

Optionally, the noise retriever is configured for determining a noise type and a noise level.

Optionally, the Lombard effect related feature template includes pre-determined values of the Lombard effect related features of the user voice under different noise parameters.

Optionally, the pre-determined values of the Lombard effect related features include averaged values of the Lombard effect related features collected for the user voice under different noise parameters during a training period.

Optionally, the spoofing detector is configured for determining the voice spoofing probability as a function of a different between the actual values of the Lombard effect related features and the pre-determined values of the Lombard effect related features from the Lombard effect related feature template of the authenticated user corresponding to the determined noise parameters.

Optionally, the Lombard effect related feature template further includes weights of the Lombard effect related features and the spoofing detector is configured for determining the voice spoofing probability as a function of the weighted difference between the actual values of the Lombard effect related features and the pre-determined values of the Lombard effect related features, the weighted different being obtained with the weights.

Optionally, the apparatus further includes a decision module configured for validating the authentication of the user based on the voice spoofing probability.

Optionally, the apparatus further includes a data collector configured for collecting, for each user, characteristics of the user voice under normal conditions, noise parameters, actual values of the Lombard effect related features of the user voice under the noise parameters, and the Lombard feature effect related template.

Optionally, the apparatus further includes a learning engine configured for updating the Lombard effect related feature template of the user with the actual values of the Lombard effect related features in reply to the validation of the authentication of the user by the decision module and/or a learning trigger.

Therefore, in contradistinction to the prior art, according to the method, and the apparatus, improves the protection against voice spoofing attacks in the noisy environments. The method, and the apparatus improve the accuracy in the voice input of the user with the voice spoofing probability even in the very noisy environments.

These and other aspects of the disclosure will be apparent from the implementations described below.

## BRIEF DESCRIPTION OF DRAWINGS

Implementations of the disclosure will now be described, by way of example only, with reference to the accompanying drawings, in which:

FIG. 1 illustrates a block diagram of an apparatus for voice spoofing detection in noisy environment in accordance with an implementation of the disclosure;

FIG. 2 is a block diagram of an apparatus for voice spoofing detection in noisy environment in accordance with an implementation of the disclosure;

FIG. 3 illustrates a graphical representation of spoofing probability in accordance with an implementation of the disclosure;

FIG. 4 illustrates a system architecture of an apparatus for voice spoofing detection in noisy environment in accordance with an implementation of the disclosure; and

FIGS. 5A and 5B are flow diagrams that illustrate a method of voice spoofing detection in noisy environment in accordance with an implementation of the disclosure.

## DETAILED DESCRIPTION OF THE DRAWINGS

Implementations of the disclosure provide a method of voice spoofing detection in noisy environment with improved protection and accuracy, and an apparatus for voice spoofing detection in the noisy environment with improved protection and accuracy.

To make solutions of the disclosure more comprehensible for a person skilled in the art, the following implementations of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

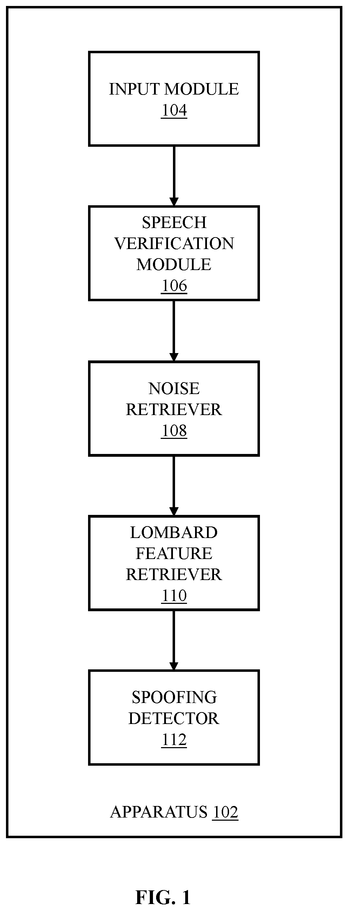

FIG. 1 illustrates a block diagram of an apparatus **102** for voice spoofing detection in noisy environment in accordance with an implementation of the disclosure. The apparatus **102** includes an input module **104** configured for receiving a voice input of a user and an environmental noise measure corresponding to the voice input of the user, a speech verification module **106** configured for authenticating the user based on the voice input, a noise retriever **108** configured for determining noise parameters based on the environmental noise measure, a Lombard feature retriever **110** configured for determining actual values of Lombard effect related features based on the voice input of the user, and a spoofing detector **112** configured for determining a voice spoofing probability by comparing the actual values of the Lombard effect related features with a Lombard effect related feature template of the authenticated user corresponding to the determined noise parameters.

The apparatus **102** provides improved protection against voice spoofing attacks in noisy environments. The apparatus **102** protects against replay, mimicking and voice synthesis attacks. The apparatus **102** may include additional independent authentication factors to authenticate the user thereby securing systems. The apparatus **102** is relatively lightweight. The apparatus **102** provides improved accuracy in the voice input of the user with the voice spoofing probability even in the very noisy environments. The apparatus **102** introduces a complementary technique of speech spoofing detection utilizing noise for good, which brings significant improvement of the voice anti-spoofing in the noisy environments.

Lombard effect or Lombard reflex is an involuntary tendency of speakers that increases their vocal effort when speaking in noise to enhance the audibility of their voice. The Lombard feature retriever **110** is configured to determine the actual values of the Lombard effect related features with the Lombard effect. The Lombard effect includes loudness and also other acoustic features such as pitch, rate, duration of syllables, and the like. The Lombard effect may maintain an auditory signal to noise ratio, SNR of the speaker's spoken words.

The apparatus **102** may change the original voice input of the user into a Lombard adjusted speech. Optionally, the Lombard adjusted speech includes any of increase in phonetic fundamental frequencies, shift in energy from low frequency bands to middle or high bands, increase in sound intensity, increase in vowel duration, spectral tilting, shift in format center frequencies, a duration of content words prolonging to a greater degree, or using greater lung volumes. Optionally, the Lombard adjusted speech varies per noise type and level.

Optionally, the Lombard feature retriever **110** is configured for determining actual values of the Lombard effect related features by estimating changes between characteristics of the user voice in time, spectrum and power-spectrum domains under normal conditions and in a noisy environment, including changes in: phonetic fundamental frequencies, an energy distribution among low, middle and high frequency bands, a sound intensity, a vowel duration, spectral tilting, format center frequencies, a key words duration and a lung volume.

Optionally, the noise retriever **108** is configured for determining a noise type and a noise level. The noise retriever **108** may determine noise type and level aware Lombard features per user.

Optionally, the Lombard effect related feature template includes pre-determined values of the Lombard effect related features of the user voice under different noise parameters.

Optionally, the pre-determined values of the Lombard effect related features include averaged values of the Lombard effect related features collected for the user voice under different noise parameters during a training period.

Optionally, the spoofing detector **112** is configured for determining the voice spoofing probability as a function of a different between the actual values of the Lombard effect related features and the pre-determined values of the Lombard effect related features from the Lombard effect related feature template of the authenticated user corresponding to the determined noise parameters.

Optionally, the Lombard effect related feature template further includes weights of the Lombard effect related features and the spoofing detector **112** is configured for determining the voice spoofing probability as a function of the weighted difference between the actual values of the Lombard effect related features and the pre-determined values of the Lombard effect related features, the weighted different being obtained with the weights.

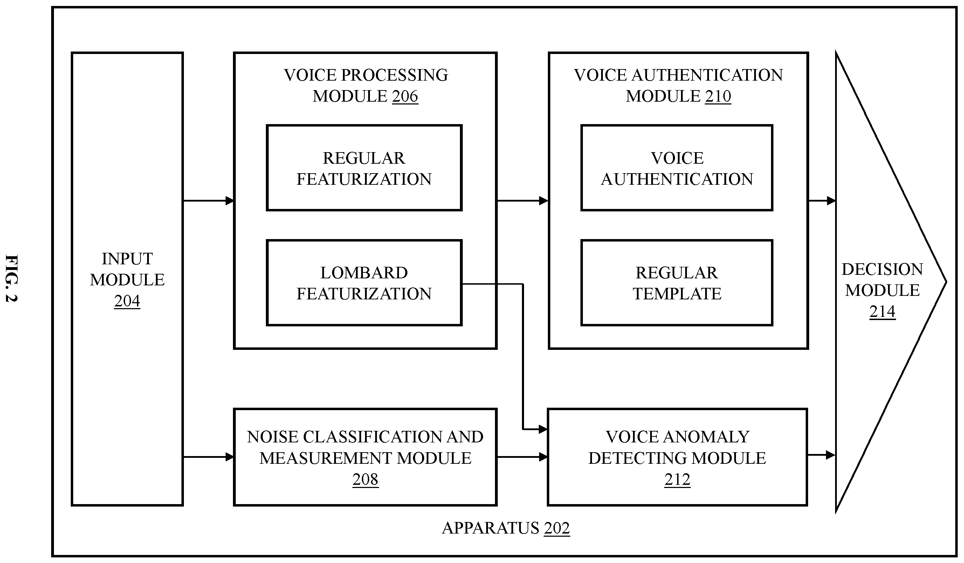

FIG. 2 is a block diagram of an apparatus **202** for voice spoofing detection in noisy environment in accordance with an implementation of the disclosure. The apparatus **202** includes an input module **204,** a voice processing module **206,** a noise classification and measurement module **208,** a voice authentication module **210,** and a voice anomaly detecting module **212.** Optionally, the apparatus **202** further includes a decision module **214** configured for validating the authentication of the user based on the voice spoofing probability. The apparatus **202** may be placed in a vehicle. Optionally, the vehicle is a car. The input module **204** is configured to monitor any of voice of a user or an environmental noise. The voice of the user may be at least one of talk or commands. The environmental noise may be noises of any of tires, engine, air conditioner, road, cabin music, and the like. Optionally, the input module **204** is a microphone configured to monitor any of the voice of the user or the environmental noise. Optionally, the input module 204 obtains a voice input of the user.

The voice processing module **206** is configured to process any of the voice input of the user or the environmental noise, with a regular featurization method and a Lombard featurization method. The regular featurization method may process the voice input of the user to convert the voice input into algorithms. Optionally, the algorithms are used to train a learning engine and/or enable the learning engine to perform one or more operations. The Lombard featurization method may process the voice input of the user to enhance the voice input. The noise classification and measurement module **208** is configured to determine a noise type (Perceptual Linear Prediction, PLP) and a noise level on any of the voice input of the user or the environmental noise. The Lombard featurization method in the voice processing module **206** determines Lombard voice parameters based on the noise type and the noise level in any of the voice input of the user or the environmental noise. The determined Lombard voice parameters may be compared with Actual Lombard Parameters, ALP retrieved from the voice input of the user. Optionally, determination of Lombard voice changes of the user can be learned during the training of the learning engine.

The voice authentication module **210** is configured to authenticate the user based on the voice input of the user. Optionally, the learning engine enables the one or more operations based on the voice input of the user only when the voice authentication module **210** authenticates the user. The voice authentication module **210** may include a regular template including one or more controls to perform the one or more operations based on the voice input of the user. Optionally, the regular template includes one or more models along with templates and configurations for one or more users. The learning engine may create the one or more models for the one or more users. The voice anomaly detection module **212** is configured to determine a spoofing probability in the voice input of the user. The spoofing probability may be calculated as a function of difference between the Actual Lombard Parameters (ALP) and the determined Lombard voice parameters. Optionally, the spoofing probability is calculated with a function of difference between the ALP and the measured parameters based on the noise type PLP, i.e. P = f(/PLP = - ALP/).

The decision module **214** is configured to validate the authentication of the user based on the voice spoofing probability. The decision module **214** at least one of approve or decline the authentication of the user based on the voice input of the user. Optionally, the learning engine enables the one or more operations based on the voice input of the user when the decision module **214** approves the authentication of the user. Optionally, the learning engine enables an output module to alert the user when the decision module **214** declines the authentication of the user.

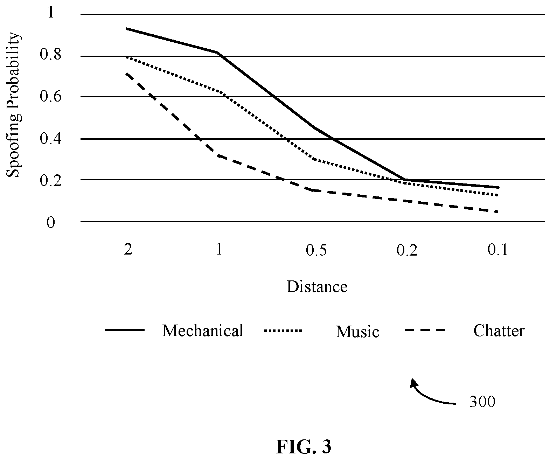

FIG. 3 illustrates a graphical representation **300** of a spoofing probability in accordance with an implementation of the disclosure. The graphical representation **300** shows a dependence of the spoofing probability on a distance, a noise type and a noise level:

$$\text{Spoofing Probability} = \text{f (Distance, Noise type, Noise level).}$$

Optionally, one or more features of time, spectrum, and power spectrum domains related to Lombard effect retrieved from a voice input of a user. Optionally, the one or more features include phonetic fundamental frequencies (F0, F1, F2), energy from low frequency bands to middle or high bands (EL, EM, EH), sound intensity (M), vowel duration (VD), spectral tilting (C), format center frequencies (FFT x nBins), a duration of key words (D1, D2 ... Dn - key phrase dependent), and the like. Optionally, average estimations of the one or more features are created for the user talking in appropriate conditions during a pre-defined period or per pre-defined number of most recent sessions. The appropriate conditions may be defined by a noise type and a Signal to Noise Ratio, SNR level. Noises that may be addressed include mechanical noises including noises of engine, air conditioner, vibrations, and the like, road noises including noises of tiers, wind, road specific vibrations, and the like, music noises, chatter noises, and nature noises including wind, rain, forest and the like. The distance may be calculated with a measured (FMi) and estimated sampled average (FEi). The distance may be calculated with a formula as follows:

$$\text{Distance} = \sum_{i=1}^{n} /\text{FMi} - \text{FEi}/\text{Wi}$$

The calculated distance between the measured (FMi) and the estimated sampled average (FEi) may be used for estimation of the spoofing probability. Optionally, advanced weighted distance (Wi) or alternative techniques can be applied for accuracy improvements. The alternative technique may be a machine learning technique.

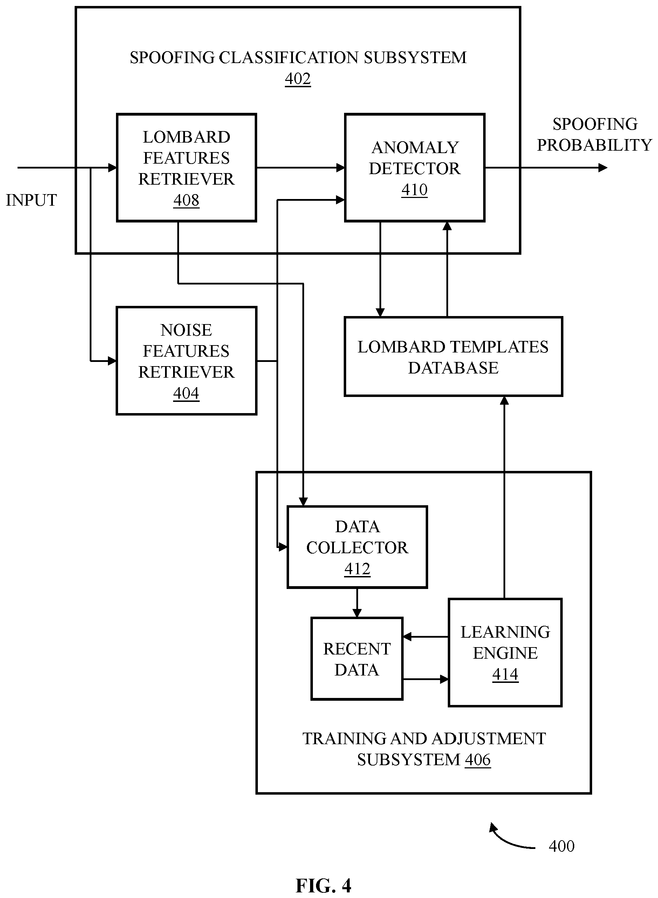

FIG. 4 illustrates a system architecture **400** of an apparatus for voice spoofing detection in noisy environment in accordance with an implementation of the disclosure. The system architecture **400** includes a spoofing classification subsystem **402**, a noise features retriever **404** and a training and adjustment subsystem **406**. The spoofing classification subsystem **402** includes a Lombard features retriever **408**, and an anomaly detector **410**. The Lombard features retriever **408** receives a voice input of a user and an environment noise. The voice input of the user and the environment noise may be an input audio stream. Optionally, the Lombard features retriever **408** receives the input audio stream with an input module. The Lombard features retriever **408** is configured to retrieve voice features from the input audio stream. The voice features may be any of a talk or commands of the user.

The noise features retriever **404** is configured to infer noise type in the input audio stream. The noise features retriever **404** may calculate noise parameters based on the noise type of the input audio stream. Optionally, the noise parameter includes Signal to Noise Ratio, SNR. The anomaly detector **410** is configured to compare retrieved feature vector with expected values for the user in a noise context to determine a spoofing probability. Optionally, the retrieved feature vector is the retrieved voice features from the input audio stream. The anomaly detector **410** performs comparison by using features template. Optionally, the features template is stored in Lombard templates database. The Lombard templates database may store the Lombard features collected and averaged during training of a learning engine.

Optionally, the apparatus further includes a data collector **412** configured for collecting, for each user, characteristics of the user voice under normal conditions, noise parameters, actual values of the Lombard effect related features of the user voice under the noise parameters, and the Lombard feature effect related template. Optionally, the apparatus further includes a learning engine **414** configured for updating the Lombard effect related feature template of the user with the actual values of the Lombard effect related features in reply to the validation of the authentication of the user by the decision module and/or a learning trigger.

The training and adjustment subsystem **406** in the system architecture **400** includes the data collector **412**, and the learning engine **414**. Optionally, the learning engine **414** is a user learning engine. The training and adjustment subsystem **406** may receive new blocks with new Application Program Interfaces, APIs. The data collector **412** is configured to create feature vectors of speech fragments and manage a collection of user's measurements from the noise type, and the noise parameters of the input audio stream. Optionally, the creation of the feature vectors enables addressing trends of the user's vocal characteristics. The data collector **412** may store the feature vectors as recent data in a database. The learning engine **414** is configured to refresh the Lombard features stored in the Lombard templates database used for comparisons of the anomaly detector **410.** Optionally, the learning engine **414** may run periodically or step in on Key Performance Indicators, KPIs degradation, and the like.

Optionally, the system architecture **400** includes a speech verification system that is configured to authenticate the user based on the voice input of the user, and the features of the user's voice. The speech verification system may determine a user ID based on the voice input of the user. Optionally, the system architecture **400** includes a spoofing classification where the features of the user's voice can be compared with the expected Lombard features. Optionally, the system architecture **400** includes an additional system that runs background learning and updates Lombard templates database that is trending with time.

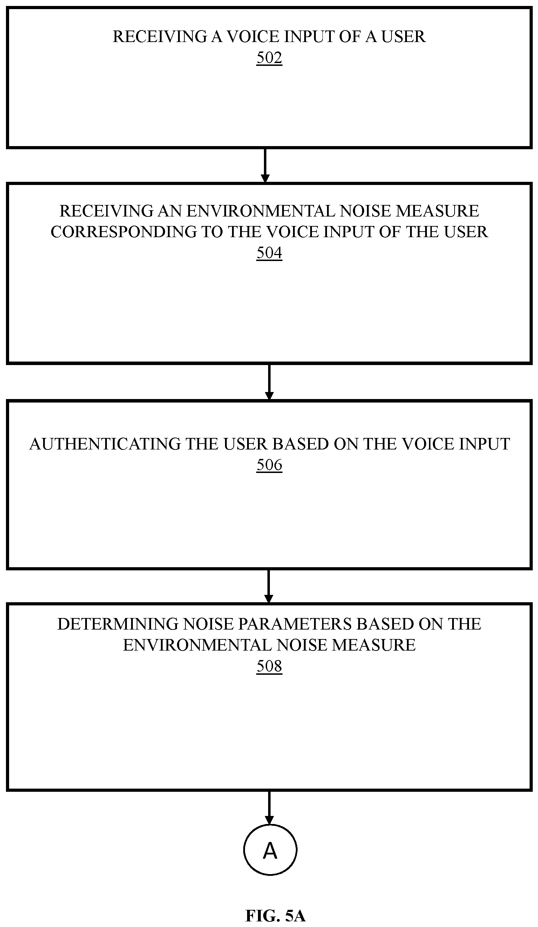

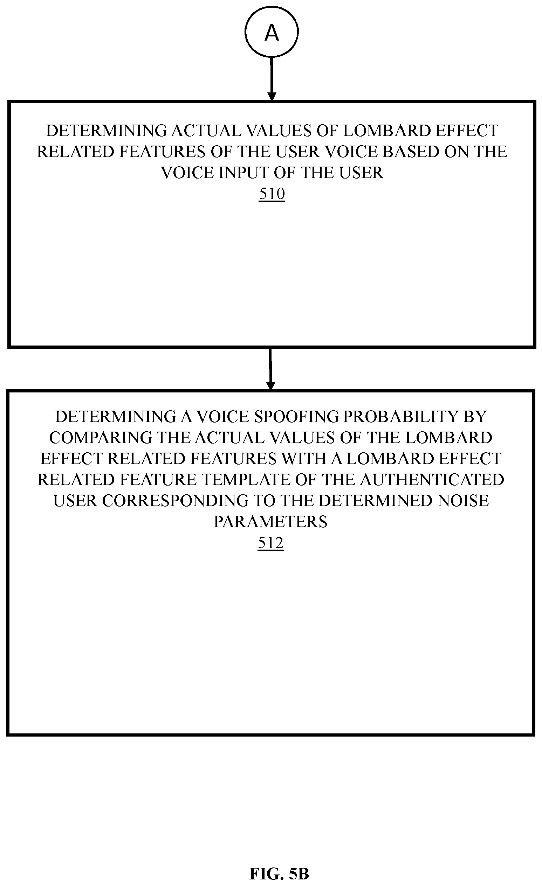

FIGS. 5A and 5B are flow diagrams that illustrate a method of voice spoofing detection in noisy environment in accordance with an implementation of the disclosure. At a step **502,** a voice input of a user is received. At a step **504,** an environmental noise measure corresponding to the voice input of the user is received. At a step **506,** the user is authenticated based on the voice input. At a step **508,** noise parameters are determined based on the environmental noise measure. At a step **510,** actual values of Lombard effect related features of the user voice are determined based on the voice input of the user. At a step **512,** a voice spoofing probability is determined by comparing the actual values of the Lombard effect related features with a Lombard effect related feature template of the authenticated user corresponding to the determined noise parameters.

This method provides improved protection against voice spoofing attacks in noisy environments. The method protects against replay, mimicking and voice synthesis attacks. The method may include additional independent authentication factors to authenticate the user thereby securing systems. The method is relatively lightweight. The method provides improved accuracy in the voice input of the user with the voice spoofing probability even in the very noisy environments. The method introduces a complementary technique of speech spoofing detection utilizing noise for good, which brings significant improvement of the voice anti-spoofing in the noisy environments.

Optionally, the Lombard effect related features include changes between characteristics of the user voice in time, spectrum and power-spectrum domains under normal conditions and in the noisy environment, including changes in: phonetic fundamental frequencies, an energy distribution among low, middle and high frequency bands, a sound intensity, a vowel duration, spectral tilting, formal center frequencies, a key words duration and a lung volume.

Optionally, the noise parameters include a noise type and a noise level.

Optionally, the Lombard effect related feature template includes pre-determined values of the Lombard effect related features of the user voice under different noise parameters.

Optionally, the pre-determined values of the Lombard effect related features include averaged values of the Lombard effect related features collected for the user voice under different noise parameters during a training period.

Optionally, the voice spoofing probability is determined as a function of a different between the actual values of the Lombard effect related features and the pre-determined values of the Lombard effect related features from the Lombard effect related feature template of the authenticated user corresponding to the determined noise parameters.

Optionally, the Lombard effect related feature template further includes weights of the Lombard effect related features and the voice spoofing probability is determined as a function of the weighted difference between the actual values of the Lombard effect related features and the pre-determined values of the Lombard effect related features, the weighted different being obtained with the weights.

Optionally, the method further includes validating the authentication of the user based on the voice spoofing probability.

Optionally, the method further includes updating the Lombard effect related feature template of the user with the actual values of the Lombard effect related features in reply to the validation of the authentication of the user.

It should be understood that the arrangement of components illustrated in the figures described are exemplary and that other arrangement may be possible. It should also be understood that the various system components (and means) defined by the claims, described below, and illustrated in the various block diagrams represent components in some systems configured according to the subject matter disclosed herein. For example, one or more of these system components (and means) may be realized, in whole or in part, by at least some of the components illustrated in the arrangements illustrated in the described figures.

In addition, while at least one of these components are implemented at least partially as an electronic hardware component, and therefore constitutes a machine, the other components may be implemented in software that when included in an execution environment constitutes a machine, hardware, or a combination of software and hardware.

Although the disclosure and its advantages have been described in detail, it should be understood that various changes, substitutions, and alterations can be made herein without departing from the scope of the disclosure as defined by the appended claims.

**Claims**

1. A method of voice spoofing detection in noisy environment, the method comprising:

   receiving (502) a voice input of a user,
   receiving (504) an environmental noise measure corresponding to the voice input of the user,
   authenticating (506) the user based on the voice input,
   determining (508) noise parameters based on the environmental noise measure,
   determining (510) actual values of Lombard effect related features of the user voice based on the voice input of the user, and
   determining (512) a voice spoofing probability by comparing the actual values of the Lombard effect related features with a Lombard effect related feature template of the authenticated user corresponding to the determined noise parameters.

2. The method of claim 1, wherein the Lombard effect related features comprise changes between characteristics of the user voice in time, spectrum and power-spectrum domains under normal conditions and in the noisy environment, including changes in: phonetic fundamental frequencies, an energy distribution among low, middle and high frequency bands, a sound intensity, a vowel duration, spectral tilting, format center frequencies, a key words duration and a lung volume.

3. The method of claim 1 or 2, wherein the noise parameters comprise a noise type and a noise level.

4. The method of any one of claims 1 to 3, wherein the Lombard effect related feature template comprises pre-determined values of the Lombard effect related features of the user voice under different noise parameters.

5. The method of claim 4, wherein the pre-determined values of the Lombard effect related features comprise averaged values of the Lombard effect related features collected for the user voice under different noise parameters during a training period.

6. The method of claim 4 or 5, wherein the voice spoofing probability is determined as a function of a difference between the actual values of the Lombard effect related features and the pre-determined values of the Lombard effect related features from the Lombard effect related feature template of the authenticated user corresponding to the determined noise parameters.

7. The method of claim 6, wherein the Lombard effect related feature template further comprises weights of the Lombard effect related features and the voice spoofing probability is determined as a function of the weighted difference between the actual values of the Lombard effect related features and the pre-determined values of the Lombard effect related features, the weighted difference being obtained with the weights.

8. An apparatus (102, 202) for voice spoofing detection in noisy environment, the apparatus (102, 202) comprising:

   an input module (104, 204) configured for receiving a voice input of a user and an environmental noise measure corresponding to the voice input of the user,
   a speech verification module (106) configured for authenticating the user based on the voice input,
   a noise retriever (108) configured for determining noise parameters based on the environmental noise measure,
   a Lombard feature retriever (110) configured for determining actual values of Lombard effect related features based on the voice input of the user, and
   a spoofing detector (112) configured for determining a voice spoofing probability by comparing the actual values of the Lombard effect related features with a Lombard effect related feature template of the authenticated user corresponding to the determined noise parameters.

9. The apparatus (102, 202) of claim 8, wherein the Lombard feature retriever (110) is configured for determining the actual values of the Lombard effect related features by estimating changes between characteristics of the user voice in time, spectrum and power-spectrum domains under normal conditions and in a noisy environment, including changes in: phonetic fundamental frequencies, an energy distribution among low, middle and high frequency bands, a sound intensity, a vowel duration, spectral tilting, format center frequencies, a key words duration and a lung volume.

10. The apparatus (102, 202) of claim 8 or 9, wherein the noise retriever (108) is configured for determining a noise type and a noise level.

11. The apparatus (102, 202) of any one of claims 8 to 10, wherein the Lombard effect related feature template comprises pre-determined values of the Lombard effect related features of the user voice under different noise parameters.

12. The apparatus (102, 202) of claim 11, wherein the pre-determined values of the Lombard effect related features comprise averaged values of the Lombard effect related features collected for the user voice under different noise parameters during a training period.

13. The apparatus (102, 202) of claim 11 or 12, wherein the spoofing detector (112) is configured for determining the voice spoofing probability as a function of a difference between the actual values of the Lombard effect related features and the pre-determined values of the Lombard effect related features from the Lombard effect related feature template of the authenticated user corresponding to the determined noise parameters.

14. The apparatus (102, 202) of claim 13, wherein the Lombard effect related feature template further comprises weights of the Lombard effect related features and the spoofing detector (112) is configured for determining the voice spoofing probability as a function of the weighted difference between the actual values of the Lombard effect related features and the pre-determined values of the Lombard effect related features, the weighted difference being obtained with the weights.

15. The apparatus (102, 202) of any one of claims 8 to 14, further comprising a decision module (214) configured for validating the authentication of the user based on the voice spoofing probability.


**Patentansprüche**

1. Verfahren zum Erkennen von Spoofing in lauter Umgebung, wobei das Verfahren Folgendes umfasst:

   Empfangen (502) einer Stimmeingabe eines Benutzers,
   Empfangen (504) einer Umgebungsgeräuschmessung, die der Stimmeingabe des Benutzers entspricht,
   Authentifizieren (506) des Benutzers basierend auf der Stimmeingabe,
   Bestimmen (508) von Geräuschparametern basierend auf der Umgebungsgeräuschmessung,
   Bestimmen (510) tatsächlicher Werte von Merkmalen der Benutzerstimme, die den Lombard-Effekt betreffen, basierend auf der Stimmeingabe des Benutzers, und
   Bestimmen (512) einer Spoofing-Wahrscheinlichkeit durch Vergleichen der tatsächlichen Werte der Merkmale, die den Lombard-Effekt betreffen, mit einer Vorlage für Merkmale, die den Lombard-Effekt betreffen, des authentifizierten Benutzers, die den bestimmten Geräuschparametern entspricht.

2. Verfahren gemäß Anspruch 1, wobei die Merkmale, die den Lombard-Effekt betreffen, Änderungen zwischen Eigenschaften der Benutzerstimme in Zeit-, Spektrum- und Leistungsspektrumbereichen unter normalen Bedingungen und in der lauten Umgebung umfassen, was Änderungen in Folgendem beinhaltet: phonetische Grundfrequenzen, eine Energieverteilung zwischen Niedrig-, Mittel- und Hochfrequenzbändern, eine Schallintensität, eine Vokaldauer, spektrale Neigung, Formatmittenfrequenzen, eine Schlüsselwortdauer und ein Lungenvolumen.

3. Verfahren gemäß Anspruch 1 oder 2, wobei die Geräuschparameter einen Geräuschtyp und einen Geräuschpegel umfassen.

4. Verfahren gemäß einem der Ansprüche 1 bis 3, wobei die Vorlage für Merkmale, die den Lombard-Effekt betreffen, vorbestimmte Werte der Merkmale, die den Lombard-Effekt betreffen, der Benutzerstimme unter verschiedenen Geräuschparametern umfasst.

5. Verfahren gemäß Anspruch 4, wobei die vorbestimmten Werte der Merkmale, die den Lombard-Effekt betreffen, gemittelte Werte der Merkmale, die den Lombard-Effekt betreffen, umfassen, die für die Benutzerstimme unter verschiedenen Geräuschparametern während einer Trainingsperiode gesammelt werden.

6. Verfahren gemäß Anspruch 4 oder 5, wobei die Spoofing-Wahrscheinlichkeit als eine Funktion einer Differenz zwischen den tatsächlichen Werten der Merkmale, die den Lombard-Effekt betreffen, und den vorbestimmten Werten der Merkmale, die den Lombard-Effekt betreffen, aus der Vorlage für Merkmale, die den Lombard-Effekt betreffen, des authentifizierten Benutzers, die den bestimmten Geräuschparametern entspricht, bestimmt wird.

7. Verfahren gemäß Anspruch 6, wobei die Vorlage für Merkmale, die den Lombard-Effekt betreffen, ferner Gewichtungen der Merkmale, die den Lombard-Effekt betreffen, umfasst und die Spoofing-Wahrscheinlichkeit als eine Funktion der gewichteten Differenz zwischen den tatsächlichen Werten der Merkmale, die den Lombard-Effekt betreffen, und den vorbestimmten Werten der Merkmale, die den Lombard-Effekt betreffen, bestimmt wird, wobei die gewichtete Differenz mit den Gewichtungen erlangt wird.

8. Vorrichtung (102, 202) zum Erkennen von Spoofing in lauter Umgebung, wobei die Vorrichtung (102, 202) Folgendes umfasst:

   ein Eingabemodul (104, 204), das dazu konfiguriert ist, eine Stimmeingabe eines Benutzers und eine Umgebungsgeräuschmessung, die der Stimmeingabe des Benutzers entspricht, zu empfangen,
   ein Sprachverifizierungsmodul (106), das dazu konfiguriert ist, den Benutzer basierend auf der Stimmeingabe zu authentifizieren, einen Geräuschabrufer (108), der dazu konfiguriert ist, Geräuschparameter basierend auf der Umgebungsgeräuschmessung zu bestimmen,
   einen Lombard-Merkmalsabrufer (110), der dazu konfiguriert ist, tatsächliche Werte von Merkmalen, die den Lombard-Effekt betreffen, basierend auf der Stimmeingabe des Benutzers zu bestimmen, und
   einen Spoofing-Detektor (112), der dazu konfiguriert ist, eine Spoofing-Wahrscheinlichkeit durch Vergleichen der tatsächlichen Werte der Merkmale, die den Lombard-Effekt betreffen, mit einer Vorlage für Merkmale, die den Lombard-Effekt betreffen, des authentifizierten Benutzers, die den bestimmten Geräuschparametern entspricht, zu bestimmen.

9. Vorrichtung (102, 202) gemäß Anspruch 8, wobei der Lombard-Merkmalsabrufer (110) dazu konfiguriert ist, die tatsächlichen Werte der Merkmale, die den Lombard-Effekt betreffen, durch Schätzen von Änderungen zwischen Eigenschaften der Benutzerstimme in Zeit-, Spektrum- und Leistungsspektrumbereichen unter normalen Bedingungen und in einer lauten Umgebung zu bestimmen, was Änderungen in Folgendem beinhaltet: phonetische Grundfrequenzen, eine Energieverteilung zwischen Niedrig-, Mittel- und Hochfrequenzbändern, eine Schallintensität, eine Vokaldauer, spektrale Neigung, Formatmittenfrequenzen, eine Schlüsselwortdauer und ein Lungenvolumen.

10. Vorrichtung (102, 202) gemäß Anspruch 8 oder 9, wobei der Geräuschabrufer (108) dazu konfiguriert ist, einen Geräuschtyp und einen Geräuschpegel zu bestimmen.

11. Vorrichtung (102, 202) gemäß einem der Ansprüche 8 bis 10, wobei die Vorlage für Merkmale, die den Lombard-Effekt betreffen, vorbestimmte Werte der Merkmale, die den Lombard-Effekt betreffen, der Benutzerstimme unter verschiedenen Geräuschparametern umfasst.

12. Vorrichtung (102, 202) gemäß Anspruch 11, wobei die vorbestimmten Werte der Merkmale, die den Lombard-Effekt betreffen, gemittelte Werte der Merkmale, die den Lombard-Effekt betreffen, umfassen, die für die Benutzerstimme unter verschiedenen Geräuschparametern während einer Trainingsperiode gesammelt werden.

13. Vorrichtung (102, 202) gemäß Anspruch 11 oder 12, wobei der Spoofing-Detektor (112) dazu konfiguriert ist, die Spoofing-Wahrscheinlichkeit als eine Funktion einer Differenz zwischen den tatsächlichen Werten der Merkmale, die den Lombard-Effekt betreffen, und den vorbestimmten Werten der Merkmale, die den Lombard-Effekt betreffen, aus der Vorlage für Merkmale, die den Lombard-Effekt betreffen, des authentifizierten Benutzers, die den bestimmten Geräuschparametern entspricht, zu bestimmen.

14. Vorrichtung (102, 202) gemäß Anspruch 13, wobei die Vorlage für Merkmale, die den Lombard-Effekt betreffen, ferner Gewichtungen der Merkmale, die den Lombard-Effekt betreffen, umfasst und der Spoofing-Detektor (112) dazu konfiguriert ist, die Spoofing-Wahrscheinlichkeit als eine Funktion der gewichteten Differenz zwischen den tatsächlichen Werten der Merkmale, die den Lombard-Effekt betreffen, und den vorbestimmten Werten der Merkmale, die den Lombard-Effekt betreffen, zu bestimmen, wobei die gewichtete Differenz mit den Gewichtungen erlangt wird.

15. Vorrichtung (102, 202) gemäß einem der Ansprüche 8 bis 14, ferner umfassend ein Entscheidungsmodul (214), das dazu konfiguriert ist, die Authentifizierung des Benutzers basierend auf der Spoofing-Wahrscheinlichkeit zu validieren.

**Revendications**

1. Procédé de détection de mystification vocale dans un environnement bruyant, le procédé comprenant :

   la réception (502) d'une entrée vocale d'un utilisateur,
   la réception (504) d'une mesure de bruit environnemental correspondant à l'entrée vocale de l'utilisateur,
   l'authentification (506) de l'utilisateur sur la base de l'entrée vocale,
   la détermination (508) des paramètres de bruit sur la base de la mesure de bruit environnemental,
   la détermination (510) des valeurs réelles des caractéristiques de la voix de l'utilisateur liées à l'effet Lombard sur la base de l'entrée vocale de l'utilisateur, et
   la détermination (512) d'une probabilité de mystification vocale en comparant les valeurs réelles des caractéristiques liées à l'effet Lombard avec un modèle de caractéristiques liées à l'effet Lombard de l'utilisateur authentifié correspondant aux paramètres de bruit déterminés.

2. Procédé selon la revendication 1, dans lequel les caractéristiques liées à l'effet Lombard comprennent des changements entre les caractéristiques de la voix de l'utilisateur dans les domaines temporel, spectral et de puissance-spectre dans des conditions normales et dans un environnement bruyant, comportant des changements dans : les fréquences fondamentales phonétiques, une distribution d'énergie entre les bandes de fréquences basse, moyenne et haute, une intensité sonore, une durée de voyelle, une inclinaison spectrale, des fréquences centrales de format, une durée de mots clés et un volume pulmonaire.

3. Procédé selon la revendication 1 ou 2, dans lequel les paramètres de bruit comprennent un type de bruit et un niveau de bruit.

4. Procédé selon l'une quelconque des revendications 1 à 3, dans lequel le modèle de caractéristiques liées à l'effet Lombard comprend des valeurs prédéterminées des caractéristiques liées à l'effet Lombard de la voix de l'utilisateur sous différents paramètres de bruit.

5. Procédé selon la revendication 4, dans lequel les valeurs prédéterminées des caractéristiques liées à l'effet Lombard comprennent des valeurs moyennes des caractéristiques liées à l'effet Lombard collectées pour la voix de l'utilisateur sous différents paramètres de bruit pendant une période d'entraînement.

6. Procédé selon la revendication 4 ou 5, dans lequel la probabilité de mystification vocale est déterminée sur la base d'une différence entre les valeurs réelles des caractéristiques liées à l'effet Lombard et les valeurs prédéterminées des caractéristiques liées à l'effet Lombard à partir du modèle de caractéristiques liées à l'effet Lombard de l'utilisateur authentifié correspondant aux paramètres de bruit déterminés.

7. Procédé selon la revendication 6, dans lequel le modèle de caractéristiques liées à l'effet Lombard comprend également des pondérations des caractéristiques liées à l'effet Lombard et la probabilité de mystification vocale est déterminée sur la base de la différence pondérée entre les valeurs réelles des caractéristiques liées à l'effet Lombard et les valeurs prédéterminées des caractéristiques liées à l'effet Lombard, la différence pondérée étant obtenue avec les pondérations.

8. Appareil (102, 202) de détection de mystification vocale dans un environnement bruyant, l'appareil (102, 202) comprenant :

   un module d'entrée (104, 204) configuré pour recevoir une entrée vocale d'un utilisateur et une mesure de bruit environnemental correspondant à l'entrée vocale de l'utilisateur,
   un module de vérification vocale (106) configuré pour authentifier l'utilisateur sur la base de l'entrée vocale,
   un récupérateur de bruit (108) configuré pour déterminer des paramètres de bruit sur la base de la mesure de bruit environnemental,
   un récupérateur de caractéristiques Lombard (110) configuré pour déterminer des valeurs réelles des caractéristiques liées à l'effet Lombard sur la base de l'entrée vocale de l'utilisateur, et
   un détecteur de mystification (112) configuré pour déterminer une probabilité de mystification vocale en comparant les valeurs réelles des caractéristiques liées à l'effet Lombard avec un modèle de caractéristiques liées à l'effet Lombard de l'utilisateur authentifié correspondant aux paramètres de bruit déterminés.

9. Appareil (102, 202) selon la revendication 8, dans lequel le récupérateur de caractéristiques de Lombard (110) est configuré pour déterminer les valeurs réelles des caractéristiques liées à l'effet Lombard en estimant les changements entre les caractéristiques de la voix de l'utilisateur dans les domaines temporel, spectral et de puissance-spectre dans des conditions normales et dans un environnement bruyant, comportant des changements dans : les fréquences fondamentales phonétiques, une distribution d'énergie entre les bandes de fréquences basse, moyenne et haute, une intensité sonore, une durée de voyelle, une inclinaison spectrale, des fréquences centrales de format, une durée de mots clés et un volume pulmonaire.

10. Appareil (102, 202) selon la revendication 8 ou 9, dans lequel le récupérateur de bruit (108) est configuré pour déterminer un type de bruit et un niveau de bruit.

11. Appareil (102, 202) selon l'une quelconque des revendications 8 à 10, dans lequel le modèle de caractéristiques liées à l'effet Lombard comprend des valeurs prédéterminées des caractéristiques liées à l'effet Lombard de la voix de l'utilisateur sous différents paramètres de bruit.

12. Appareil (102, 202) selon la revendication 11, dans lequel les valeurs prédéterminées des caractéristiques liées à l'effet Lombard comprennent des valeurs moyennes des caractéristiques liées à l'effet Lombard collectées pour la voix de l'utilisateur sous différents paramètres de bruit pendant une période d'entraînement.

13. Appareil (102, 202) selon la revendication 11 ou 12, dans lequel le détecteur de mystification (112) est configuré pour déterminer la probabilité de mystification vocale sur la base d'une différence entre les valeurs réelles des caractéristiques liées à l'effet Lombard et les valeurs prédéterminées des caractéristiques liées à l'effet Lombard à partir du modèle de caractéristiques liées à l'effet Lombard de l'utilisateur authentifié correspondant aux paramètres de bruit déterminés.

14. Appareil (102, 202) selon la revendication 13, dans lequel le modèle de caractéristiques liées à l'effet Lombard comprend également des pondérations des caractéristiques liées à l'effet Lombard et le détecteur de mystification (112) est configuré pour déterminer la probabilité de mystification vocale sur la base de la différence pondérée entre les valeurs réelles des caractéristiques liées à l'effet Lombard et les valeurs prédéterminées des caractéristiques liées à l'effet Lombard, la différence pondérée étant obtenue avec les pondérations.

15. Appareil (102, 202) selon l'une quelconque des revendications 8 à 14, comprenant également un module de décision (214) configuré pour valider l'authentification de l'utilisateur sur la base de la probabilité de mystification vocale.

INPUT MODULE
104

SPEECH
VERIFICATION
MODULE
106

NOISE
RETRIEVER
108

LOMBARD
FEATURE
RETRIEVER
110

SPOOFING
DETECTOR
112

APPARATUS 102

**FIG. 1**

**FIG. 2**

FIG. 3

SPOOFING CLASSIFICATION SUBSYSTEM
402

LOMBARD
FEATURES
RETRIEVER
408

INPUT

ANOMALY
DETECTOR
410

SPOOFING
PROBABILITY

NOISE
FEATURES
RETRIEVER
404

LOMBARD TEMPLATES
DATABASE

DATA
COLLECTOR
412

RECENT
DATA

LEARNING
ENGINE
414

TRAINING AND ADJUSTMENT
SUBSYSTEM 406

400

FIG. 4

RECEIVING A VOICE INPUT OF A USER
502

RECEIVING AN ENVIRONMENTAL NOISE MEASURE
CORRESPONDING TO THE VOICE INPUT OF THE USER
504

AUTHENTICATING THE USER BASED ON THE VOICE INPUT
506

DETERMINING NOISE PARAMETERS BASED ON THE
ENVIRONMENTAL NOISE MEASURE
508

A

**FIG. 5A**

A

DETERMINING ACTUAL VALUES OF LOMBARD EFFECT
RELATED FEATURES OF THE USER VOICE BASED ON THE
VOICE INPUT OF THE USER
510

DETERMINING A VOICE SPOOFING PROBABILITY BY
COMPARING THE ACTUAL VALUES OF THE LOMBARD
EFFECT RELATED FEATURES WITH A LOMBARD EFFECT
RELATED FEATURE TEMPLATE OF THE AUTHENTICATED
USER CORRESPONDING TO THE DETERMINED NOISE
PARAMETERS
512

**FIG. 5B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GOMEZ ALANIS ALEJANDRO et al.** A Deep Identity Representation for Noise Robust Spoofing Detection. *INTERSPEECH*, 02 September 2018